# EUROPEAN PATENT APPLICATION

(11) **EP 2 781 793 A1**
(43) Date of publication of application: **24.09.2014**
(21) Application number: 13305343.9
(22) Date of filing: 21.03.2013
(51) Int. Cl.: F16H 55/36

(54) **Pulley device and rotary machine comprising such a device**

(71) Applicant: Aktiebolaget SKF, 41550 Göteborg (SE)
(72) Inventor: Viault, Samuel, 37360 Saint-Antoine-du-Rocher (FR); Berruet, Nicolas, 37260 Artannes sur Indre (FR)
(74) Representative: Kohl, Thomas

(57) **Abstract**

The invention concerns a pulley device designed to be mounted on a rotary machine (17) comprising a pulley (2), a rolling bearing (3) a torque transmission plate (4) designed to be mounted on a rotary spindle (19) of the rotary machine (17) and having the general shape of a disc. Said pulley is mounted on an outer ring (6) of the rolling bearing (3) and on the torque transmission plate (4). An inner ring (5) of the rolling bearing (3) is designed to be mounted on a static hollow shaft (18) of the rotary machine (17). Said torque transmission plate (4) comprises at least one series of slotted holes (13) made through the plate (4). The torque transmission plate (4) further comprises retaining means (14) for a ring (15) designed to axially retain the rolling bearing (3) onto the rotary machine (17) such that the said ring (15) is maintained with the torque transmission plate (14) before the assembly of the pulley device (1) on the rotary machine (17).

## Description

The invention relates to the field of torque transmission devices used in particular in belt-driven rotary machines, for example motor vehicle air conditioning compressors.

In such compressor drive devices, a belt-driven pulley drives the rotary spindle of the compressor via a torque transmission plate. The pulley is mounted on the outer ring of a rolling bearing, the inner ring of which is secured to a hollow shaft of the compressor housing. This type of device is described particularly in document FR 2 790 521.

It is also known from the document JP-B-4015072 to provide torque limiters to the torque transmission plate. Indeed, since the belt-drive is driven by an internal combustion engine of the motor vehicle, an excessive torque value can be applied to the transmission spindle via the torque transmission plate that could create internal damages. The torque limiters consist in concentric slotted holes uniformly spaced so that it remains bridges on the plate between the ends of two successive slotted holes. The bridges are designed to rupture in case of an excessive transmitted torque.

Damping elements may be provided on the torque transmission plate in order to reduce vibration between the rotary spindle and the pulley, such as an elastic ring as the ones described in EP 0 702 167 or FR 2 853 373.

The assembly process of the rotary machine may comprise a first step consisting in assembling the different components forming the pulley device and a second step consisting in assembling the said pulley device on the rotary machine. These two steps may be separated, the first step being performed by a pulley device manufacturer and the second step by a rotary machine manufacturer.

However, it is necessary to provide axial retaining means for the pulley device in case of torque limiters rupture, in particular between the rolling bearing and the hollow shaft. With such a pulley device and an assembly process, the rolling bearing is covered by the torque transmission plate and is accessible with difficulty to axially restrain it.

It is therefore a particular object of the present invention to overcome these aforementioned drawbacks by providing a pulley device of simple design, that is easy to assemble, economical, able to operate for a long time in both an effective and an economic manner.

The invention concerns a pulley device designed to be mounted on a rotary machine comprising a pulley, a rolling bearing, a torque transmission plate designed to be mounted on a rotary spindle of the rotary machine and having the general shape of a disc. Said pulley is mounted on an outer ring of the rolling bearing and on the torque transmission plate. An inner ring of the rolling bearing is designed to be mounted on a static hollow shaft of the rotary machine. Said torque transmission plate comprises at least one series of slotted holes made through the plate.

According to the invention, the torque transmission plate comprises retaining means for a ring designed to axially retain the rolling bearing onto the rotary machine such that the said ring is maintained with the torque transmission plate before the assembly of the pulley device on the rotary machine.

Thanks to this invention, the ring is beforehand mounted on the torque transmission plate of the pulley device. Once the pulley device is assembled onto the rotary machine, the ring is moved up to a final position on the rotary machine such as to axially retain the rolling bearing on the rotary spindle.

The ring is put into a final position such as to cooperate with the rotary machine thanks to the insertion of a tool through the slotted holes made on the torque transmission plate.

Such a pulley device is then easy to assemble on a rotary machine and enables manufacturing time and costs reductions.

Moreover, a tool can inserted into the slotted holes in order to remove the said ring and then the pulley device is easily dismountable from the rotary machine.

According to further aspects of the invention, which are advantageous but not compulsory, such a rolling bearing may incorporate one or several of the following features as long as there is no contradiction:
- The rolling bearing comprises rolling elements which are balls mounted in a rolling chamber defined between the inner and outer rings.
- The torque transmission plate comprises an axial sleeve designed to be mounted on the rotary spindle of the rotary machine and a radial plate extending from the axial sleeve and having the general shape of a disc.
- The torque transmission plate comprises a damping element made of elastic material mounted between the radial plate and the pulley so that it damps the vibrations between the pulley and the rotary spindle.
- The damping element is overmoulded onto the radial plate and the pulley.
- The radial plate comprises the series of slotted holes.
- The at least one series of slotted holes comprise at least two holes.
- At least one series of slotted holes act as torque limiters by being angularly equidistant and so that the ends of two adjacent holes form a bridge on the torque transmission plate liable to rupture if the transmitted torque exceeds a threshold value.
- The torque transmission plate comprises a first series of slotted holes acting as torque limiter means and a second series of slotted holes permitting the insertion of a tool for the assembly of the pulley device onto the rotary machine, in particular for pushing up the ring to axially retain the rolling bearing on the rotary machine.
- The torque transmission plate comprises one unique series of slotted holes comprising two ends of one hole are connected by an outer edge and an inner edge such as the radial gap between the said edges is not constant.
- The unique series of slotted holes is such as one of the inner or outer edges connecting two ends of one hole comprises a radial recess, the other edge being an arc circle centred on the axis of the torque transmission plate.
- The radial plate is made of a stamped metal sheet.
- The ring is opened on an angular sector.
- The ring is a circlips.
- The retaining means for the ring consist in at least two tongues provided on the torque transmission plate.
- The tongues are angularly equidistant.
- The tongues are identical.
- The tongues radially extend from the damping element towards the centre of the torque transmission plate.
- The tongues radially extend along the bridges of the torque transmission plate between the ends of two adjacent slotted holes.
- The tongues and the damping element consist in a one-piece component.
- The tongues cooperate with the radial plate such as the ring is axially blocked between the radial plate on one side and the tongues on the other side.
- The tongues bear against the radial plate.
- The tongues have no contact with the radial plate.
- The tongues have a general parallelepiped shape comprising a sloped portion provided on a radial surface of the tongues bearing against the radial plate and able to cooperate with the ring.
- The retaining means for the ring consist in a removable part cooperating with the torque transmission plate.
- The removable part comprises a radial plate and at least two tongues axially extending from the said radial plate and designed to be inserted into the series of slotted holes of the torque transmission plate in order to axially retain the ring.
- Each tongue of the removable part comprises a free end wherein a radial groove is provided for retaining the ring, said ring being engaged into the radial grooves of all the tongues of the removable part.
- The radial groove is provided on the outer surface of each tongue of the removable part.
- The radial groove is provided on the inner surface of each tongue of the removable part.
- The removable part is made in a plastic material.

The present invention also concerns a rotary machine comprising a static hollow shaft, a rotary spindle and a pulley device according to any of the preceding embodiments.

According to further aspects of the invention, which are advantageous but not compulsory, such a rotary machine may incorporate one or several of the following features as long as there is no contradiction:
- The inner ring of the rolling bearing is fitted onto a stepped end of the static hollow shaft, the said inner ring axially bearing against a radial surface of the said hollow shaft.
- The radial surface of the hollow shaft is a shoulder.
- The stepped end of the hollow shaft comprises a peripheral groove wherein is inserted the ring such as the inner ring of the rolling bearing is axially comprised between the said ring and the radial surface of the hollow shaft.
- The radial thickness of the ring is greater than the depth of the groove.
- The end of the hollow shaft comprises a conical shape with a sloped surface in order to facilitate the ring mounting.
- The rotary spindle comprises a threaded end which is inserted into a central opening made through the torque transmission plate.

The present invention also concerns an assembly process of a rotary machine comprising the following steps:
(a) In a preliminary step, the pulley device comprising a pulley, a rolling bearing, a torque transmission plate is assembled with a ring cooperating with retaining means provided on the torque transmission plate.
(b) The pulley device is mounted onto the rotary machine, in particular the torque transmission plate is mounted on a rotary spindle of the rotary machine and an inner ring of the rolling bearing is mounted on a static hollow shaft of the rotary machine.
(c) A tool is inserted into slotted holes provided on the torque transmission plate.
(d) The ring is disengaged from the retaining means of the torque transmission plate and pushed by the tool until the ring axially retains the inner ring of the rolling bearing on the hollow shaft.
(e) The tool is removed from the pulley device and the torque transmission plate is securely fixed on the rotary spindle.

According to further aspects of the invention, which are advantageous but not compulsory, such an assembly process of a rotary machine may incorporate one or several of the following steps as long as there is no contradiction:
- The retaining means consist in tongues extending from a damping element made in an elastic material; the ring being disengaged from the said tongues by a tool that pushes the ring and elastically deforms the tongues.
- The ring is pushed by the tool until the ring is engaged into a peripheral groove on an end of the hollow shaft.
- The retaining means consist in a removable part which is removed from the torque transmission plate once the ring axially retains the inner ring of the rolling bearing on the hollow shaft.
- The retaining means consist in a removable part which is removed from the torque transmission plate once the pulley device is mounted on the rotary machine. The ring being free is then installed on the rotary machine in order to axially retain the inner ring of the rolling bearing on the hollow shaft.
- The torque transmission plate is securely fixed to a threaded end of the rotary spindle by a nut.

The present invention and its advantages will be better understood by studying the detailed description of specific embodiments given by way of non-limiting examples and illustrated by the appended drawings on which:
- Figure 1 is a front view of a pulley device;
- Figure 2a is an axial section, along the line I-I of Figure 1, in a perspective view according to a first embodiment of the invention;
- Figure 2b is a detailed view from Figure 2a of one retaining means;
- Figure 3 is an axial section in a perspective view of the pulley device and the rotary machine before the assembly;
- Figure 4a is an axial section of the pulley device mounted in an intermediate position on the rotary machine according to the first embodiment of the invention;
- Figure 4b is a detailed view from Figure 4a of one retaining means;
- Figure 5 is a radial section, along the line II-II of Figure 4a;
- Figure 6a is an axial section of the pulley device mounted in a final position on the rotary machine;
- Figure 6b is a detailed view from Figure 6a of the final position of the ring on the rotary machine;
- Figure 7 is an axial section in a back perspective view according to a second embodiment of the invention;
- Figure 8 is an axial section in a front perspective view according to the second embodiment of the invention;
- Figure 9a is an axial section of the pulley device mounted in an intermediate position on the rotary machine according to the second embodiment of the invention;
- Figure 9b is a detailed view from Figure 9a of one retaining means;
- Figure 10 is a radial section, along the line III-III of Figure 9a; and
- Figure 11 is an axial section in a perspective view of the pulley device mounted in a final position on the rotary machine according to the second embodiment of the invention.

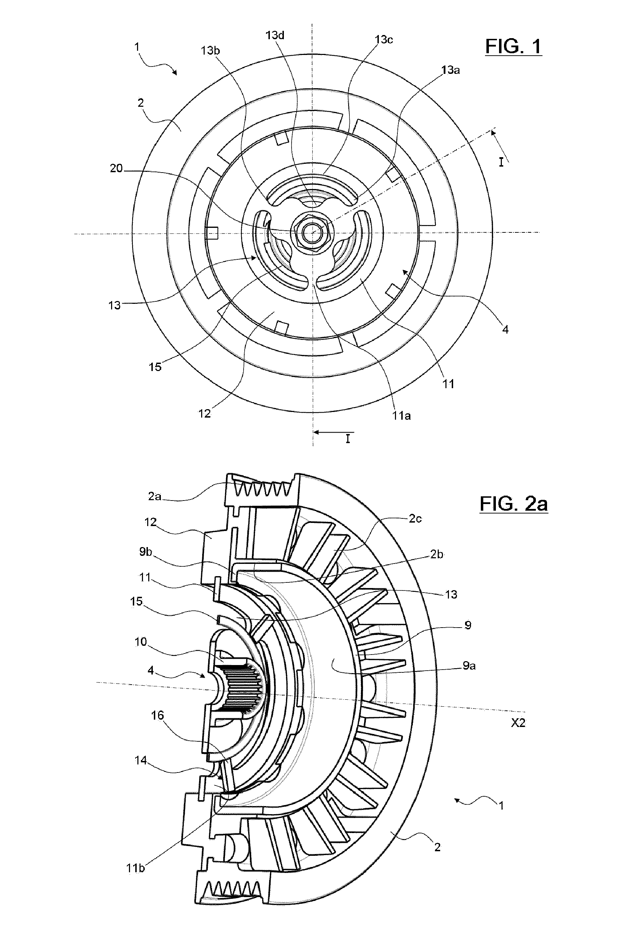

As illustrated in Figures 1 and 2a, a pulley device, designed by a general reference 1, comprises a pulley 2, a rolling bearing 3 and a torque transmission plate 4.

The pulley 2 has a rotational axis X2 and is provided with an outer surface 2a designed to cooperate with a belt (not illustrated) and a bore 2b. The outer surface 2a comprises annular ribs to cooperate with a belt of the poly-V type for example. The pulley 2 also comprises a plurality of stiffening ribs 2c for reinforcing the pulley structure. The pulley 2 may be made of resin, for example based on polyamide, phenolic resin or alternatively polyurethane or light alloy.

In this embodiment and the following ones, the terms "axial" and "radial" are defined in relation to the rotation axis X2 of the pulley 2. Then an axial portion is parallel to this axis of rotation and a radial portion is perpendicular to this axis.

The rolling bearing 3 comprises an inner ring 5, an outer ring 6, one row of rolling elements 7, here balls, and two seals 8a and 8b. The rolling bearing 3 may also comprise a cage (not represented) to maintain uniform circumferential spacing of the rolling elements 7.

The inner ring 5 comprises an outer surface 5a of revolution provided with a concave recess forming a raceway for the rolling elements 7. It also comprises a bore 5b and two lateral radial surfaces 5c and 5d.

The outer ring 6 comprises an outer surface 6a, a bore 6b and two lateral radial surfaces 6c and 6d. The bore 6b is provided with a concave recess forming a raceway for the rolling elements 7.

The rolling bearing 3 has an axis X3 of relative rotation between the inner ring 5 and the outer ring 6. In normal use, the axis X3 is coincident with the axis X2.

The pulley device 1 further comprises a bearing shield 9 placed between the outer ring 6 of the rolling bearing 3 and the inner bore 2b of the pulley 2. The bearing shield 9 comprises an axial portion 9a in contact with the outer surface 6a of the outer ring 6 and with the inner bore 2b of the pulley 2. The axial portion 9a extends radially towards the inner ring 5 with a radial portion 9b in contact with the radial surface 6c of the outer ring 6 and with a radial surface 2d of the bore 2b of the pulley 2, for example a shoulder. Such a bearing shield 9 forms a housing for the rolling bearing 3. The pulley may be overmoulded on the axial portion 9a of the bearing shield 9.

The seals 8a and 8b are force-fitted into slots formed on the bore 6b of the outer ring 6 and near the radial surfaces 6c, 6d.

The torque transmission plate 4 comprises a sleeve tube 10, a radial plate 11 and a damping element 12. The radial plate 11 extends radially from the axial sleeve tube 10 towards the outside and has the general shape of a disc. The radial plate is made of a stamped metal sheet. In the example of the annexed Figures, the sleeve tube 10 and the radial plate 11 are two distinct components. As an alternative, the sleeve tube 10 and the radial plate 11 may form a one-piece component.

The damping element 12 is radially located between the radial plate 11 and the pulley 2 and is overmoulded onto these two components. The damping element 12 can be of elastomeric material, for example a rubber material or a polyurethane material. The assembly comprising the pulley 2 and the torque transmission plate 4 which comprises the radial plate 11 and the damping element 12, forms one and the same indivisible component.

The radial plate 11 comprises one series of slotted holes 13 made axially through the radial plate 11. The slotted holes 13 are identical, have the form of three annular portions centred on one and the same circle and are angularly equidistant. As an alternative not represented, the number of slotted holes 13 may be two or greater than three.

The slotted holes 13 each comprise two ends 13a and 13b with an arc circle shape defining an inner portion and an outer portion. As an alternative not represented, the ends 13a, 13b may have any other shapes such as an ellipse or a triangle. The slotted holes 13 are uniformly spaced so that it remains bridges 11a on the radial pate 11 between two ends 13a and 13b of two adjacent slotted holes 13. The bridges 11a define regions of lower strength (compared to the rest of the radial plate 11) liable to rupture if the torque transmission plate 4 attempts to transmit a torque exceeding a threshold value, such as 50 N.m.

The outer portions of the ends 13a, 13b are centred on one and the same circle and connected by an outer edge 13c consisting in an arc circle. The inner portions of the ends 13a, 13b are centred on one and the same circle and connected by an inner edge 13d comprising a radial recess of curved shape radially extending towards the axis X2. As an alternative not represented, the outer edge 13c may comprise a radial recess of curved extending towards the pulley 2 and the inner edge 13d consists in an arc circle.

According to the invention, the torque transmission plate 4 further comprises retaining means 14 for a circlips 15.

According to a first embodiment of the invention illustrated in Figures 1 to 6b, the retaining means 14 consist in tongues 16 extending radially from the damping element 12 towards the axis X2.

The tongues 16 are three in number, identical, angularly equidistant and have the general shape of a parallelepiped. As an alternative not represented, the number of tongues 16 may be two or greater than three.

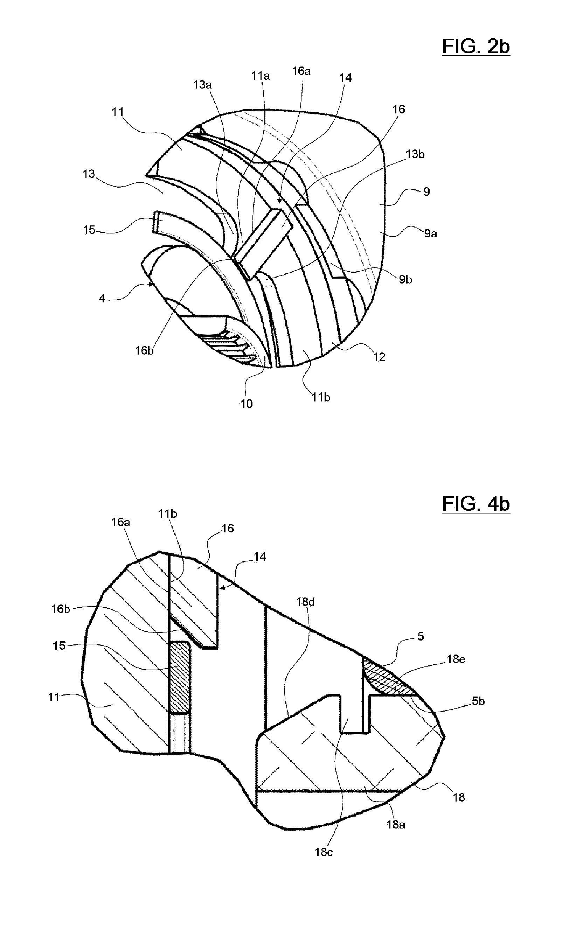

In the embodiment illustrated in Figures 2a and 2b, the tongues 16 each have a radial surface 16a bearing against a radial surface 11b of the radial plate 11. The said radial surfaces 16a of the tongues 16 are each provided with a sloped portion 16b such as the circlips 15 is axially located between the radial surface 11b of the radial plate on one side and the sloped portions 16b of the tongues 16 on the other side.

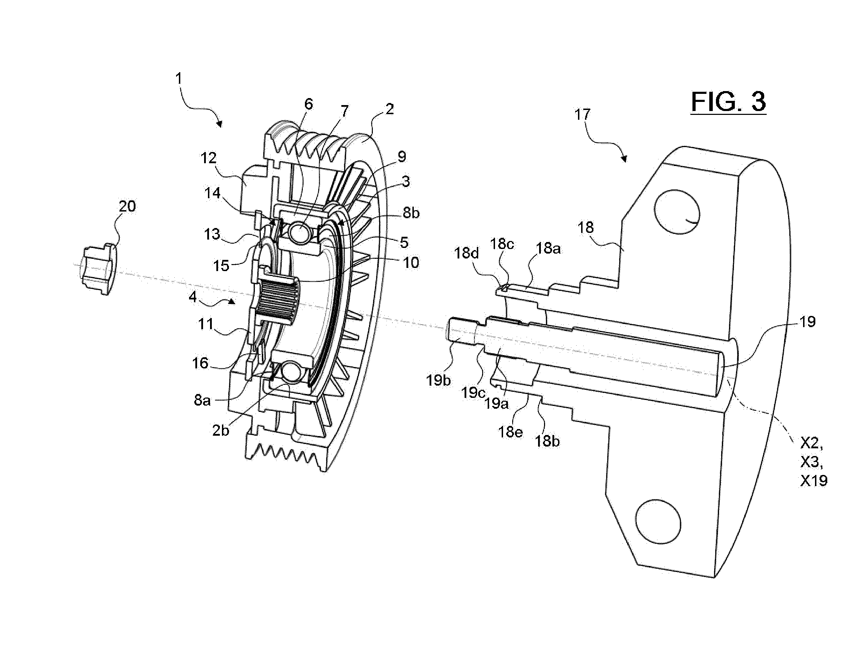

As illustrated in Figures 3 to 6b, the pulley device 1 is designed to be mounted on a rotary machine, designed by a general reference 17.

Thanks to the invention, the circlips 15 designed for axially retaining the rolling bearing 3 onto the said machine 17 is beforehand mounted on the assembled pulley device 1. The pulley device 1 can then be transported for its final mounting on the machine 17 by being provided with the circlips 15 designed to fix it.

In this embodiment and the following ones, we define the terms "interior" and "exterior" such as the exterior side Ce corresponds to the side of the pulley device 1 and the interior side Ci corresponds to the side of the rotary machine 17, in particular the rotary spindle 19, and is on the opposite of the pulley device 1.

The rotary machine 17 comprises a housing consisting in a hollow shaft 18 that does not rotate, and a rotary spindle 19 capable of rotating about an axis X19.

The hollow shaft 18 comprises a stepped end 18a provided with a radial surface 18b, for example a shoulder, and a peripheral groove 18c. The hollow shaft 18 further comprises a conical end 18d forming a sloped portion.

The rotary spindle 19 passes through the hollow shaft 18 coaxial with the said spindle 19. The rotary spindle 19 comprises a stepped end 19a ending in a threaded portion 19b designed to cooperate with a nut 20.

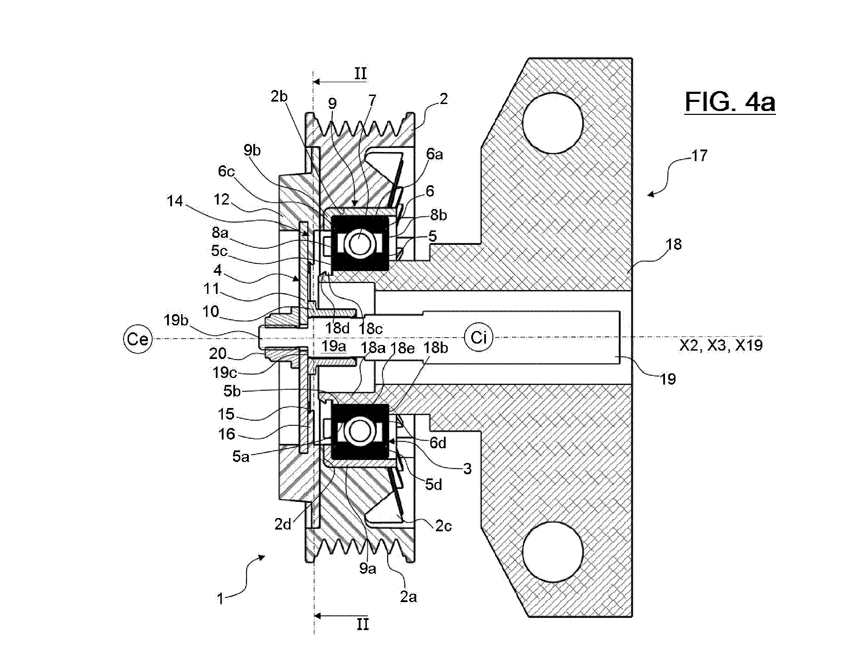

As illustrated in Figure 3, the nut 20, the pulley device 1 and the rotary machine 17 are coaxial. The pulley device 1 is then mounted on the rotary machine 17. More precisely, as shown in the intermediate mounting position of Figures 4a and 4b, the inner ring 5 of the rolling bearing 3 of the pulley device 1 is mounted onto the static hollow shaft 18 of the rotary machine 17. The inner bore 5b of the inner ring 5 is in contact with an outer axial surface 18e of the stepped end 18a of the hollow shaft 18. The radial surface 5d of the inner ring 5 directed towards the interior side Ci of the rotary machine 17 is in contact with the radial surface 18b of the stepped end 18a. The rolling bearing 3, and then the pulley device 1, is axially retained in one direction.

The torque transmission plate 4 of the pulley device 1 is mounted onto the rotary spindle 19 of the rotary machine 17. The stepped end 19a of the rotary spindle 9 is inserted in the sleeve tube 10 such as the threaded portion 19b passes through the sleeve tube 10 towards the exterior direction Ce of the pulley device 1. The threaded portion 19b cooperates with the nut 20 such as the sleeve tube 10 and the radial plate 11 are axially blocked between the said nut and a radial surface 19c, for example a shoulder, of the stepped end 19a.

In the intermediate mounting position described in Figures 4a to 5, the circlips 15 is engaged into the tongues 16 of the torque transmission plate 4.

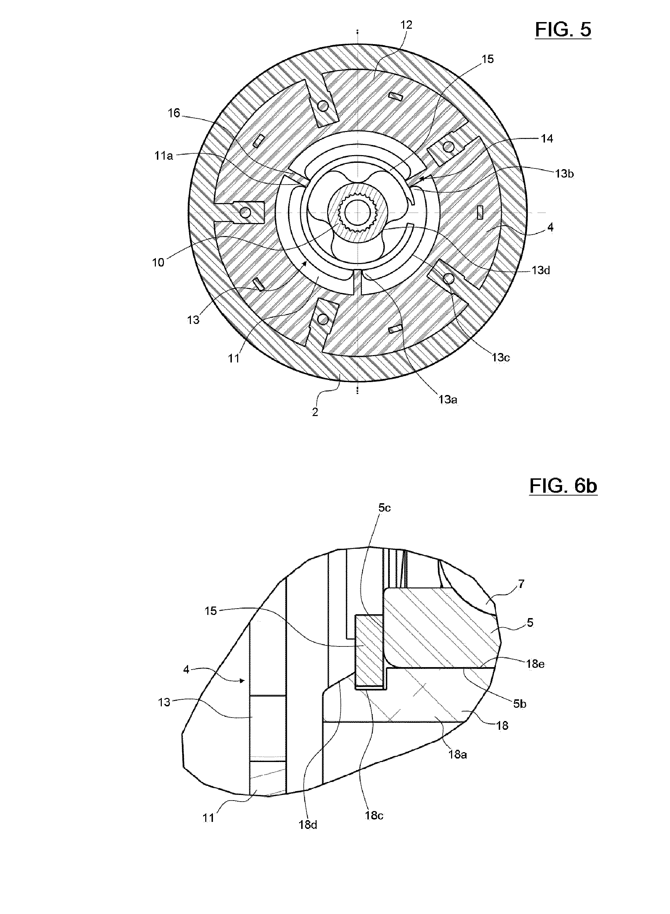

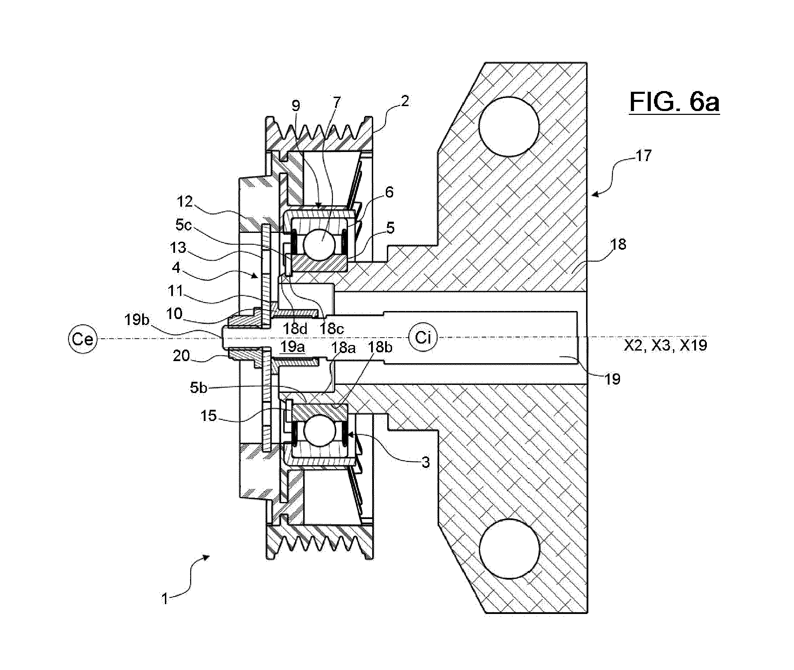

A tool (not represented) is then inserted into the slotted holes 13 in order to push the circlips 15 in an axial direction towards the interior side Ci of the rotary machine 17. The circlips 15 is then disengaged from the tongues 16 thanks to the flexibility of the elastic tongues 16 and the circlips 15. The circlips is pushed along the sloped portion 18d into the groove 18c on the stepped end 18a of the hollow shaft 18. In this final mounting position illustrated in Figures 6a and 6b, the circlips 15 is in contact with the radial surface 5c of the inner ring 5 directed towards the exterior side Ce of the pulley device 1. The rolling bearing 3, and the then the pulley device 1, is then axially retained in both directions on the hollow shaft 18 by the radial surface 18b on the one hand and the circlips 15 on the other hand.

The assembly process of the rotary machine 17 comprising a pulley device according to the first embodiment of the invention comprises the following steps:
(a) In a preliminary step, the pulley device 1 comprising a pulley 2, a rolling bearing 3, a torque transmission plate 4 is assembled with a circlips 15 cooperating with retaining means 14 consisting in tongues 16 provided on the torque transmission plate 4.
(b) The pulley device 1 is mounted onto the rotary machine 17, in particular the torque transmission plate 4 is mounted on a rotary spindle 19 of the rotary machine 17 and an inner ring 5 of the rolling bearing 3 is mounted on a static hollow shaft 18 of the rotary machine 17.
(c) A tool is inserted into slotted holes 13 provided on the torque transmission plate 4.
(d) The circlips 15 is disengaged from the retaining means 14 of the torque transmission plate 4 and pushed by the tool until the circlips 15 is engaged into a peripheral groove 18c on a stepped end 18a of the hollow shaft 18.
(e) The tool is removed from the pulley device 1 and the torque transmission plate 4 is securely fixed on the rotary spindle 19 by a nut 20.

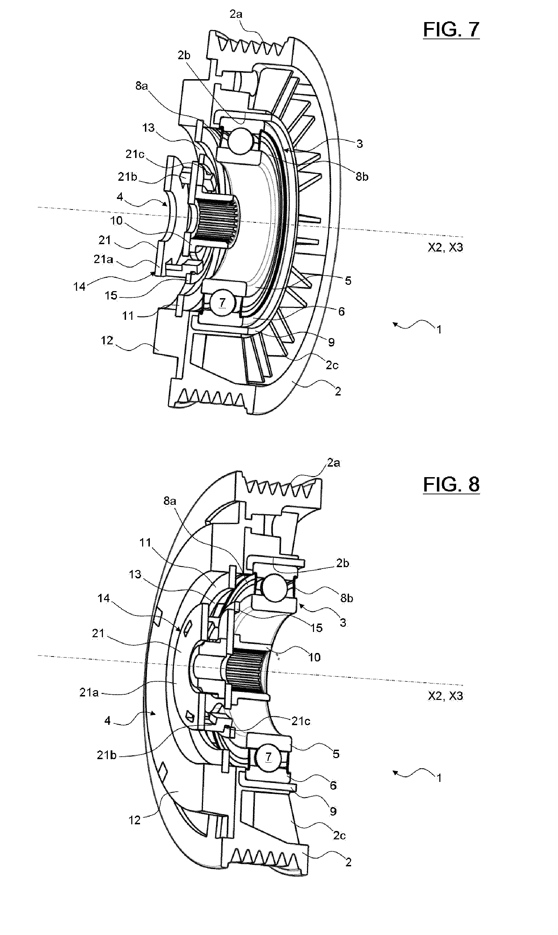

The second embodiment of the invention illustrated in Figures 7 to 11, in which identical elements bear the same references, differs from the first embodiment of Figures 1 to 6b in that the retaining means 14 consist in a removable part 21.

The removable part 21 is made in a plastic material and comprises a radial plate 21a and three tongues 21b axially extending from the said radial plate 21a. Each tongue 21a comprises an outer radial groove 21c on its end. As an alternative not represented, each tongue 21a comprises an inner radial groove on its end.

As shown in Figures 7 and 8, the tongues 21c of the removable part 21 are inserted into the slotted holes 13 of the torque transmission plate. The circlips 15 in engaged into the outer radial grooves 21c of the three tongues 21b of the removable part 21.

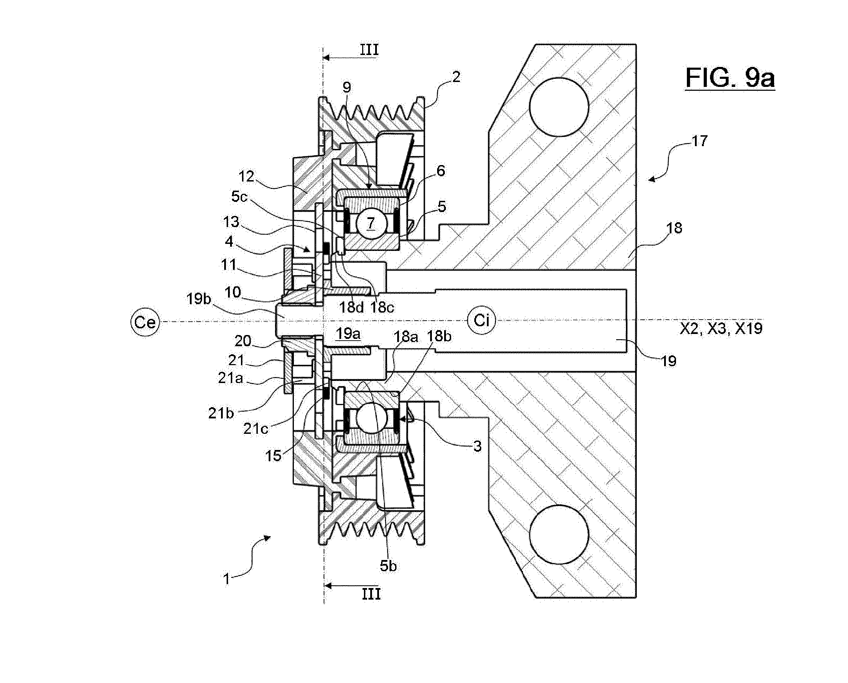

As illustrated in Figures 9a to 11, the pulley device 1 is designed to be mounted on a rotary machine, designed by a general reference 17.

Thanks to the invention, the circlips 15 designed for axially retaining the rolling bearing 3 onto the said machine 17 is beforehand mounted on the assembled pulley device 1. The pulley device 1 can then be transported for its final mounting on the machine 17 by being provided with the circlips 15 cooperating with the removable part 21.

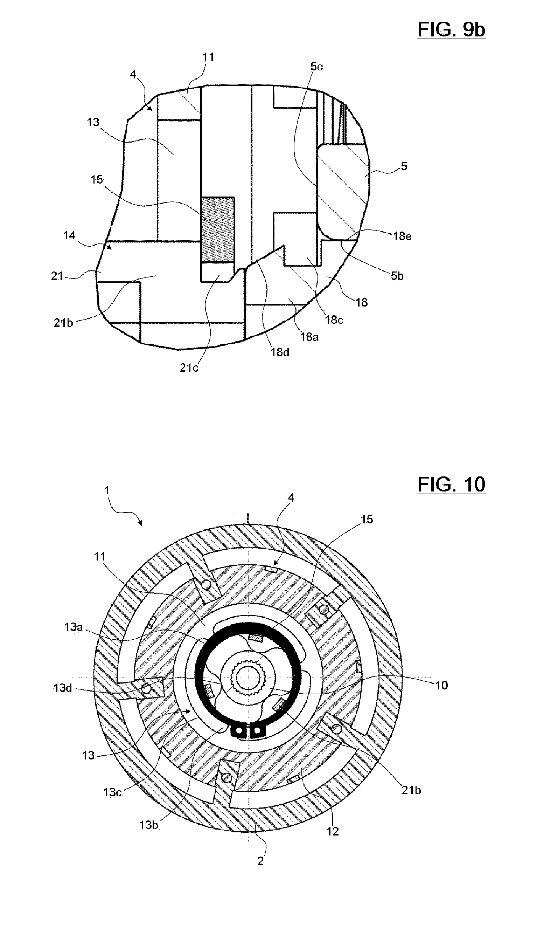

The pulley device 1 is then mounted on the rotary machine 17. More precisely, as shown in the intermediate mounting position of Figures 9a and 9b, the inner ring 5 of the rolling bearing 3 of the pulley device 1 is mounted onto the static hollow shaft 18 of the rotary machine 17. The torque transmission plate 4 of the pulley device 1 is mounted onto the rotary spindle 19 of the rotary machine 17.

In the intermediate mounting position described in Figures 9a to 10, the circlips 15 is engaged into the grooves 21c of the tongues 21a inserted into the slotted holes 13 of the radial plate 11.

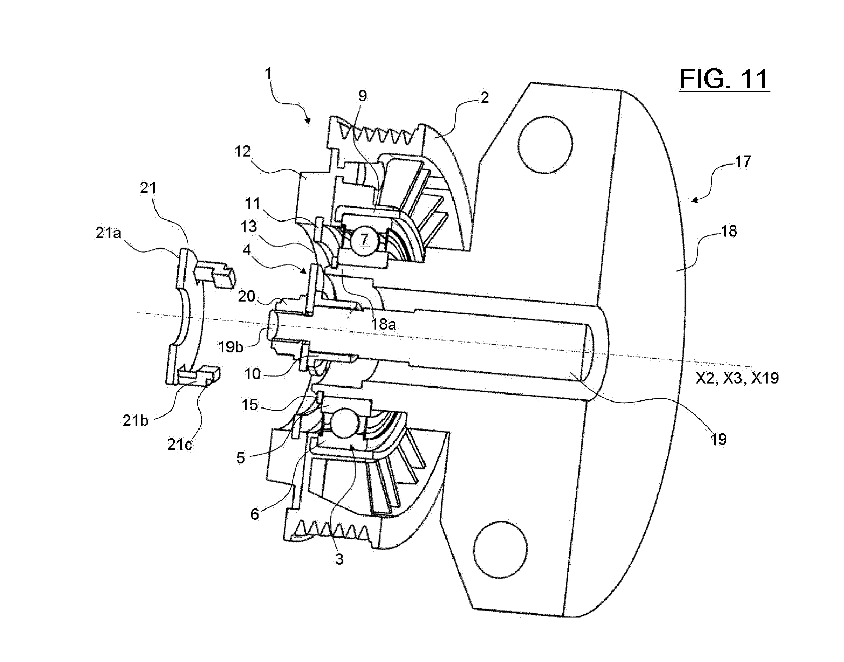

A tool (not represented) is then inserted into the slotted holes 13 in order to push the circlips 15 in an axial direction towards the interior side Ci of the rotary machine 17. The circlips 15 is then disengaged from the grooves 21c of the tongues 21b thanks to the flexibility of the plastic tongues 21c and the circlips 15. The circlips is pushed along the sloped portion 18d into the groove 18c on the stepped end 18a of the hollow shaft 18. In this final mounting position illustrated in Figure 11, the circlips 15 is in contact with the radial surface 5c of the inner ring 5 directed towards the exterior side Ce of the pulley device 1. The rolling bearing 3, and the then the pulley device 1, is then axially retained in both directions on the hollow shaft 18 by the radial surface 18b on the one hand and the circlips 15 on the other hand.

The tongues 21c are then removed from the slotted holes 13 and the removable part 21 is removed from the pulley device 1. As an advantage, such a removable part 21 can be reused for another pulley device 1 to be manufactured.

The assembly process of the rotary machine 17 comprising a pulley device according to the second embodiment of the invention comprises the following steps:
(a) In a preliminary step, the pulley device 1 comprising a pulley 2, a rolling bearing 3, a torque transmission plate 4 is assembled with a circlips 15 cooperating with retaining means 14 consisting in a removable part 14 provided on the torque transmission plate 4.
(b) The pulley device 1 is mounted onto the rotary machine, in particular the torque transmission plate is mounted on a rotary spindle of the rotary machine and an inner ring of the rolling bearing is mounted on a static hollow shaft of the rotary machine.
(c) A tool is inserted into slotted holes 13 provided on the torque transmission plate 4.
(d) The circlips 15 is disengaged from the retaining means 14 of the torque transmission plate 4 and pushed by the tool until the circlips 15 is engaged into a peripheral groove 18c on a stepped end 18a of the hollow shaft 18.
(e) The tool is removed from the pulley device 1 and the torque transmission plate 4 is securely fixed on the rotary spindle 19 by a nut 20.
(f) The removable part 21 is removed from the torque transmission plate 4.

As an alternative, the removable part 21 may be removed from the torque transmission plate 4 once the pulley device 1 is mounted on the rotary machine. The circlips 15 being free is then installed on the rotary machine 17 in order to axially retain the inner ring 5 of the rolling bearing 3 on the hollow shaft 18.

Another advantage of the invention is that a tool can be inserted into the slotted holes 13 in order to remove the circlips 15. Then the pulley device 1 is easily dismountable from the rotary machine 17.

## Claims

1. Pulley device designed to be mounted on a rotary machine (17) comprising a pulley (2), a rolling bearing (3) a torque transmission plate (4) designed to be mounted on a rotary spindle (19) of the rotary machine (17) and having the general shape of a disc, said pulley being mounted on an outer ring (6) of the rolling bearing (3) and on the torque transmission plate (4), an inner ring (5) of the rolling bearing (3) being designed to be mounted on a static hollow shaft (18) of the rotary machine (17), and said torque transmission plate (4) comprising at least one series of slotted holes (13) made through the plate (4),
**characterized in that** the torque transmission plate (4) further comprises retaining means (14) for a ring (15) designed to axially retain the rolling bearing (3) onto the rotary machine (17) in such a way that the said ring (15) is retained by the torque transmission plate (14) before the assembly of the pulley device (1) on the rotary machine (17).

2. Pulley device according to claim 1 wherein the retaining means (14) for the ring (15) consist in at least two tongues (16) provided on the torque transmission plate (4).

3. Pulley device according to claim 2 wherein the tongues (16) cooperate with the torque transmission plate (4) such as the ring (15) is axially blocked between the torque transmission plate (4) on one side and the tongues (16) on the other side.

4. Pulley device according to claim 2 or 3 wherein the tongues (16) have a general parallelepiped shape comprising a sloped portion (16b) provided on a radial surface (16a) of the tongues bearing against the torque transmission plate (4) and able to cooperate with the ring (15).

5. Pulley device according to any of the preceding claims wherein the torque transmission plate (4) comprises an axial sleeve (10), a radial plate (11) extending from the axial sleeve (10) and having the general shape of a disc and a damping element (12) made of elastic material mounted between the radial plate (11) and the pulley (2).

6. Pulley device according to claim 5 and any of the claims 2 to 4 wherein the tongues (16) radially extend from the damping element (12) towards the centre of the torque transmission plate (4).

7. Pulley device according to claim 1 wherein the retaining means (14) for the ring (15) consist in a removable part (21) cooperating with the torque transmission plate (4).

8. Pulley device according to claim 7 wherein the removable part (21) comprises a radial plate (21a) and at least two tongues (21b) axially extending from the said radial plate (21a) and designed to be inserted into the series of slotted holes (13) of the torque transmission plate (4) in order to axially retain the ring (15).

9. Pulley device according to claim 8 wherein the tongues (21b) of the removable part (21) each comprise a radial groove (21c) for retaining the ring (15), said ring being engaged into the radial grooves (21c) of all the tongues (21b) of the removable part (21).

10. Pulley device according any of the preceding claims wherein the torque transmission plate (4) comprises one unique series of slotted holes (13) such as two ends (13a, 13b) of each hole are connected by an outer edge (13c) and an inner edge (13d), one of the inner or outer edges (13d) comprising a radial recess and the other edge (13c) being an arc circle centred on the axis of the torque transmission plate (4).

11. Rotary machine comprising a static hollow shaft (18), a rotary spindle (19) and a pulley device (1) according to any of the preceding claims.

12. Rotary machine according to claim 11 wherein the hollow shaft (18) comprises a stepped end (18a) on which is mounted the inner ring (5) of the rolling bearing (3) of the pulley device (1), said inner ring (5) being axially located between a radial surface (18b) and the ring (15) cooperating with a peripheral groove (18c) provided on the said stepped end (18a).

13. Assembly process of a rotary machine comprising the following steps:
(a) In a preliminary step, the pulley device (1) comprising a pulley (2), a rolling bearing (3), a torque transmission plate (4) is assembled with a ring (15) cooperating with retaining means (14) provided on the torque transmission plate (4).
(b) The pulley device (1) is mounted onto the rotary machine (17), in particular the torque transmission plate (14) is mounted on a rotary spindle (19) of the rotary machine (17) and an inner ring (5) of the rolling bearing (3) is mounted on a static hollow shaft (18) of the rotary machine (17).
(c) A tool is inserted into slotted holes (13) provided on the torque transmission plate (4).
(d) The ring (15) is disengaged from the retaining means (14) of the torque transmission plate (4) and pushed by the tool until the ring axially retains the inner ring (5) of the rolling bearing (3) on the hollow shaft (18).
(f) The tool is removed from the pulley device (1) and the torque transmission plate (4) is securely fixed on the rotary spindle (19).

14. Assembly process according to claim 13 comprising the step of pushing the ring (15) by the tool until the ring (15) is engaged into a peripheral groove (18c) on an end (18a) of the hollow shaft (18).

15. Assembly process according to claim 13 or 14 comprising the step of removing the retaining means (14) consisting in a removable part (21) from the torque transmission plate after the disengagement of the ring (15).
